# EUROPEAN PATENT APPLICATION

(11) **EP 3 605 979 A1**
(43) Date of publication of application: **05.02.2020**
(21) Application number: 17901744.7
(22) Date of filing: 23.03.2017
(51) Int. Cl.: H04L 27/26

(54) **USER TERMINAL AND WIRELESS COMMUNICATION METHOD**

(71) Applicant: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN); JIANG, Huiling, Beijing 100190 (CN)
(74) Representative: Hoffmann Eitle
(86) International application number: PCT/JP2017/011893
(87) International publication number: WO 2018/173236

(57) **Abstract**

In order to support the transmission of uplink control information adequately even when shortened TTIs are used, a user terminal according to one aspect of the present invention has a transmitting section that transmits uplink control information by using a shortened TTI, in which a length of a transmission time interval (TTI) is shorter than 1 ms, and a control section that controls transmission of the uplink control information by using a given uplink control channel format for the shortened TTI, based on the number of bits of uplink control information transmitted in the shortened TTI.

## Description

### Technical Field

The present invention relates to a user terminal and a radio communication method in next-generation mobile communication systems.

### Background Art

In the UMTS (Universal Mobile Telecommunications System) network, the specifications of long-term evolution (LTE) have been drafted for the purpose of further increasing high speed data rates, providing lower latency and so on (see non-patent literature 1). In addition, successor systems of LTE (referred to as, for example, "LTE-A (LTE-Advanced)," "FRA (Future Radio Access)," "4G," "5G," "5G+ (plus)," "NR (New RAT (New Radio Access Technology))," "LTE Rel. 14," "LTE Rel. 15 (or later versions)," and so on) are under study for the purpose of achieving further broadbandization and increased speed beyond LTE.

In existing LTE systems (for example, LTE Rel. 13 and earlier versions), downlink (DL) and/or uplink (UL) communication are carried out by using 1-ms transmission time intervals (TTIs) (also referred to as "subframes" and so on). This 1-ms TTI is the unit of time it takes to transmit 1 channel-encoded data packet, and is the processing unit in, for example, scheduling, link adaptation, retransmission control (HARQ-ACK (Hybrid Automatic Repeat reQuest-ACKnowledgment)) and so on. A TTI of 1 ms is comprised of 2 slots.

Also, in existing LTE systems, a radio base station demodulates UL channels (including a UL data channel (for example, PUSCH (Physical Uplink Shared CHannel)) and/or a UL control channel (for example, PUCCH (Physical Uplink Control CHannel))) based on the result of channel estimation using the demodulation reference signal (DMRS).

Also, in existing LTE systems, a user terminal multiplexes and transmits a UL channel and a DMRS in a TTI (subframe) of 1 ms. In a TTI of 1 ms, multiple DMRSs of different layers for the same user terminal (or for different user terminals) are orthogonal-multiplexed using cyclic shifts (CSs) and/or orthogonal spreading codes (for example, orthogonal cover codes (OCCs)).

### Citation List

### Non-Patent Literature

Non-Patent Literature 1: 3GPP TS36.300 V8.12.0 "Evolved Universal Terrestrial Radio Access (E-UTRA) and Evolved Universal Terrestrial Radio Access Network (E-UTRAN); Overall Description; Stage 2 (Release 8)," April, 2010

### Summary of Invention

### Technical Problem

Envisaging future radio communication systems (for example, LTE Rel. 14 or 15, 5G, NR, etc.), research is underway to introduce TTIs (for example, TTIs that are shorter than 1-ms TTIs (and that are also referred to as "shortened TTIs," "short TTIs," "sTTIs," "second TTIs," "slots," "mini-slots" and so forth)) having different time lengths than the 1-ms TTIs used in existing LTE systems (also referred to as "subframes," "first TTIs," "slots," and so on).

With the introduction of the shortened TTIs, the PUCCH that is transmitted in shortened TTIs and that is shorter than an existing uplink control channel (PUCCH (Physical Uplink Control CHannel)) (and that is therefore referred to as "shortened PUCCH (sPUCCH)") is under study. However, how to design the configuration/format of the sPUCCH in detail has not been decided yet. Unless adequate sPUSCH configurations are defined and supported, a decline in communication quality, communication throughput, spectral efficiency and others might surface as a problem.

The present invention has been made in view of the above, and it is therefore an object of the present invention to provide a user terminal and a radio communication method, whereby uplink control information can be transmitted suitably even when shortened TTIs are used.

### Solution to Problem

According to one aspect of the present invention, a user terminal has a transmitting section that transmits uplink control information by using a shortened TTI, in which a length of a transmission time interval (TTI) is shorter than 1 ms, and a control section that controls transmission of the uplink control information by using a predetermined uplink control channel format for the shortened TTI, based on the number of bits of uplink control information transmitted in the shortened TTI.

### Advantageous Effects of Invention

According to the present invention, even when shortened TTIs are used, transmission of uplink control information can be supported properly.

### Brief Description of Drawings

FIGs. 1A and 1B are diagrams to show examples of sTTI configurations;
FIGs. 2A and 2B are diagrams to show examples of frequency hopping patterns and positions of DMRSs;
FIGs. 3A and 3B are diagrams to show examples of frequency hopping patterns and positions of DMRSs;
FIGs. 4A and 4B are diagrams to show examples of frequency hopping patterns and positions of DMRSs;
FIGs. 5A and 5B are diagrams to show other examples of frequency hopping patterns and positions of DMRS;
FIG. 6 is a diagram to show an exemplary schematic structure of a radio communication system according to the present embodiment;
FIG. 7 is a diagram to show an exemplary overall structure of a radio base station according to the present embodiment;
FIG. 8 is a diagram to show an exemplary functional structure of a radio base station according to the present embodiment;
FIG. 9 is a diagram to show an exemplary overall structure of a user terminal according to the present embodiment;
FIG. 10 is a diagram to show an exemplary functional structure of a user terminal according to the present embodiment; and
FIG. 11 is a diagram to show an exemplary hardware structure of a radio base station and a user terminal according to the present embodiment.

### Description of Embodiments

In existing systems (for example, LTE Rels. 8 to 13), uplink control information (UCI) is transmitted from UE, as feedback, to a device on the network side (for example, a base station (referred to as an "eNB (eNodeB)," a "BS (Base Station)"), etc.). At the timing uplink data transmission is scheduled, the UE may transmit UCI on an uplink shared channel (PUSCH (Physical Uplink Shared CHannel)). The base station controls data retransmission and scheduling for the UE based on the received UCI.

UCI in existing systems includes channel state information (CSI), including at least one of a channel quality indicator (CQI), a precoding matrix indicator (PMI), a precoding type indicator (PTI) and a rank indicator (RI), delivery acknowledgement information in response to a downlink signal (for example, PDSCH (Physical Downlink Shared CHannel)), a scheduling request (SR) and the like. The delivery acknowledgment information may be referred to as "HARQ-ACK (Hybrid Automatic Repeat reQuest Acknowledgment)," "ACK/NACK (A/N)," "retransmission control information," and so on.

For example, in existing systems support periodic CSI (P-CSI) reporting, in which UE transmits CSI in subframes of a predetermined cycle. To be more specific, UE receives (configures) P-CSI transmission subframe information, from the eNB, by way of higher layer signaling (for example, RRC (Radio Resource Control) signaling). Here, the transmission subframe information is information to identify subframes for transmitting P-CSI (also referred to as "reporting subframes"), and includes at least the cycle (gap) of these reporting subframes, and the offset value with respect to the head of the radio frame of the reporting subframe. The UE can transmit P-CSI in transmission subframes of a predetermined cycle, specified by the transmission subframe information.

As for the method for transmitting UCI as feedback, feedback to use an uplink control channel (PUCCH (Physical Uplink Control CHannel)) (UCI on PUCCH) and feedback to use an uplink shared channel (PUSCH (Physical Uplink Shared CHannel) (UCI on PUSCH) are defined. For example, the UE may transmit UCI using PUSCH when uplink user data is present. Meanwhile, the UE may transmit UCI by using PUCCH, when uplink there is no uplink user data.

Note that UCI on PUSCH is used when UCI transmission and PUSCH transmission overlap within 1 TTI (for example, 1 subframe). In this case, the UCI may be mapped to a PUCCH resource to perform PUCCH-PUSCH simultaneous transmission, or the UCI may be mapped to a radio resource of the PUSCH field to transmit the PUSCH alone.

Now, future radio communication systems (for example, LTE Rel. 14 or 15, 5G, NR, etc.) are under study to introduce TTIs (also referred to as "sTTIs," "short TTIs," "second TTIs," etc.) that have different time lengths (TTI lengths) than the 1-ms TTIs (also referred to as "subframes," "first TTIs," etc.) used in existing LTE systems, in order to realize low latency (Latency Reduction) and highly efficient control.

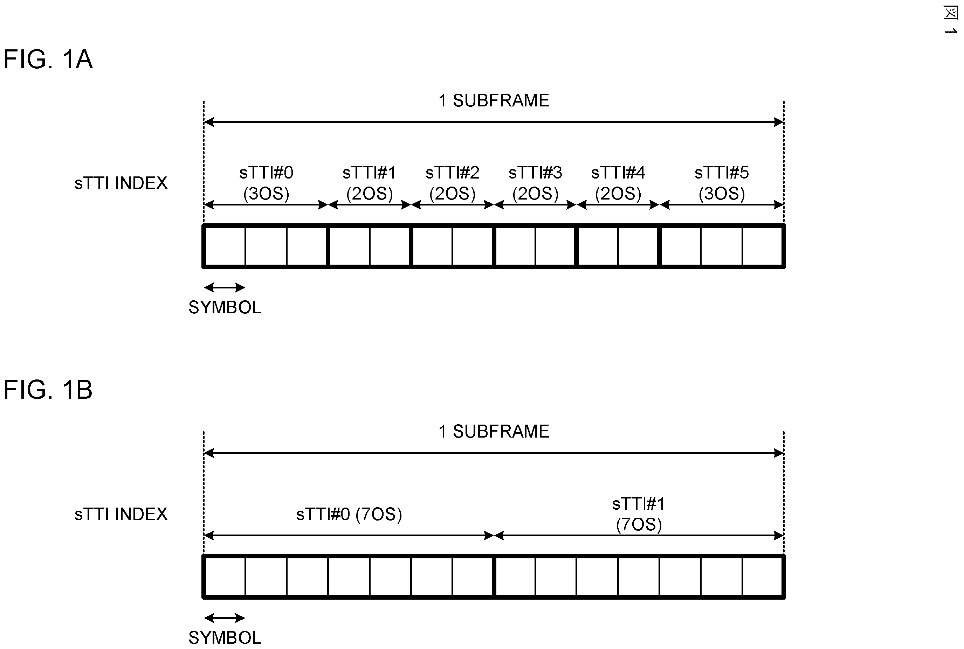

FIGs. 1 show examples of configurations of short TTIs. FIGs. 1 show cases where 1 subframe (14 OFDM symbols) is segmented into predetermined sections, and a plurality of short TTIs are provided. In FIG. 1A, 1 subframe is segmented into 3, 2, 2, 2, 2 and 3 symbols (sTTI pattern [3, 2, 2, 2, 2, 3]), and short TTIs (sTTIs #0 to #5) are configured. sTTIs #0 and #5 are constituted by 3 symbols, and sTTI #1 to #4 are constituted by 2 symbols. A configuration like this may be referred to as a "2-symbol sTTI (also referred to as "2 OSs (OFDM Symbols)," a "2-OS sTTI," a "2os/3os sTTI," etc.)." Alternatively, the configuration may be also referred to as "sTTI configuration 1," "sTTI format 1," and so forth.

In FIG. 1B, 1 subframe is segmented into 7 symbols and 7 symbols (sTTI pattern [7, 7]), and short TTIs (sTTIs #0 to #1) are configured. sTTI #0 and #1 are constituted by 7 symbols. A configuration like this is also referred to as a "7-symbol sTTI (also referred to as "7 OSs," a "7-OS sTTI," etc.)." Alternatively, the configuration may be also referred to as "sTTI configuration 2," "sTTI format 2," and so forth.

When using short TTIs, the time margin for processing (for example, coding, decoding, etc.) in UEs and/or base stations grows, so that the processing latency can be reduced. Also, when short TTIs are used, it is possible to increase the number of UEs that can be accommodated per unit time (for example, 1 ms). Short TTIs may be suitable for services that require strict latency reduction, such as URLLC.

A UE in which short TTIs are configured would use channels comprised of shorter time units than existing data and control channels. In LTE and NR, for example, as shortened channels to be transmitted and/or received in short TTIs, a shortened downlink control channel (sPDCCH (shortened PDCCH)), a shortened downlink data channel (sPDSCH (shortened PDSCH)), a shortened uplink control channel (sPUCCH (shortened PUCCH)) and a shortened downlink data channel (sPUSCH (shortened PUSCH)) and so on are under research.

The transmission of uplink control signals is likely to be controlled using at least a shortened downlink control channel (sPUCCH). However, how to design the configuration/format of the sPUCCH in detail has not been decided yet. Unless proper sPUCCH formats are stipulated, the capacity of communication systems (for example, the number of UEs to be multiplexed), the block error rate (BLER) of the sPUCCH and so forth are reduced.

Therefore, the present inventors have come up with the idea of controlling transmission of uplink control information by using uplink control channel formats (also referred to as "sPUCCH formats") that corresponds to configurations of shortened TTIs (for example, the number of symbols). To be more specific, for example, the present inventors have focused on the case where, for example, a shortened TTI is comprised of 1 slot (for example, 7 symbols), and come up with the idea of controlling transmission of uplink control information using the sPUCCH format for 1-slot shortened TTIs. For example, according to one example of the present invention, transmission is controlled by selecting a predetermined sPUCCH format, based on the number of bits of uplink control information transmitted in shortened TTIs.

Now, embodiments of the present invention will be described in detail below with reference to the accompanying drawings. Note that the radio communication methods according to the herein-contained embodiments may be used individually, or may be used in combinations. Note that, although the following description will show cases in which an sTTI is comprised of 1 slot (for example, 7 symbols), other sTTI configurations are also applicable. Also, although DMRS-based demodulation will be described hereinafter as an example of using reference signals to demodulate uplink control information (uplink control channel), sequence-based demodulation may be used as well.

### (First Example)

With the first example of the present invention, a case will be described below, in which a number of sPUCCH formats (7-symbol sPUCCH formats) for a predetermined sTTI configuration (here, 1 slot) are defined, and uplink control information (uplink control channel) is transmitted using specific sPUCCH formats based on a predetermined condition. The predetermined condition is, for example, the number of uplink control information (UCI) bits to transmit in an sTTI.

To be more specific, when the number of UCI bits to transmit in an sTTI is less than or equal to a predetermined value, a user terminal selects first sPUCCH format #1 and transmits UCI, and, when the number of bits is larger than the predetermined value, the user terminal selects second sPUCCH format #2 and transmits UCI. One predetermined value may be provided, or a number of predetermined values may be provided to configure sPUCCH formats that correspond to respective numbers of bits. The following description will exemplify cases in which the predetermined value for the number of bits is 2 bits.

### <In the event of 2 bits or less>

When UCI (for example, HARQ-ACK) is 2 bits or less, a user terminal uses at least one of sPUCCH formats 1, 1a and 1b as the sPUCCH format for sTTIs (hereinafter referred to as "sPUCCH format 1/1a/1b"). sPUCCH format 1/1a/1b (7-symbol sPUCCH format 1/1a/1b) can be used to transmit UCI of up to 2 bits (for example, HARQ-ACK), and, if necessary, a 1-bit scheduling request (SR).

sPUCCH format 1/1a/1b may use at least part of the mechanism of PUCCH format 1/1a/1b of existing LTE systems. For example, some or all of resource (RE) mapping, DMRS cyclic shift (CS), OCC, and the coding scheme (for example, block coding) can be configured as in existing PUCCH format 1/1a/1b.

Also, the same slot-based sPUCCH format may be configured to support both intra-sTTI frequency hopping (Intra-sTTI FH) and frequency hopping other than intra-sTTI frequency hopping.

Also, the user terminal can use sPUCCH format 1/1a/1b, suitably, to transmit 1-bit or 2-bit HARQ-ACK in scenarios not using CA. Alternatively, the user terminal may apply sPUCCH format 1/1a/1b to CA scenarios in which HARQ-ACK bundling is applied to the spatial domain and/or the CC range.

When the user terminal transmits an SR and an HARQ-ACK simultaneously using sPUCCH format 1/1a/1b, the user terminal may control the resource for transmitting the sPUCCH (sPUCCH resource) depending on the content of the SR. For example, when an SR is positive, the user terminal controls UCI transmission by using the sPUCCH resource for the SR, and, otherwise, the user terminal controls UCI transmission by using the sPUCCH resource for the HARQ-ACK.

In addition, since sPUCCH formats 1a/1b are applied to UCI of 2 bits or less, channel coding does not have to be applied.

sPUCCH format 1/1a/1b may be designed so that reference signals (RSs) are allocated to the third to fifth symbols (#2, #3 and #4) among the symbols (#0 to #6) that constitute an sTTI (slot). Also, when frequency hopping is used to transmit an sPUCCH (or UCI), reference signals are allocated to every different frequency field in 1 slot.

### <In the event of 2 bits or more>

When UCI (for example, HARQ-ACK and/or CSI) is more than 2 bits, a user terminal uses at least one of sPUCCH formats 2, 2a, 2b, 3, 4 and 5 as the sPUCCH format for sTTIs (hereinafter referred to as "sPUCCH format 2/2a/2b/3/4/5"). sPUCCH format 2/2a/2b/3/4/5 (7-symbol sPUCCH format 2/2a/2b/3/4/5) can be used to transmit UCI of 2 bits of or more (for example, CSI and/or multiple HARQ-ACKs), and, if necessary, a 1-bit scheduling request (SR).

PUCCH format 2/2a/2b/3/4/5 may use at least part of the mechanism of PUCCH format 2/2a/2b/3/4/5 of existing LTE systems. For example, some or all of rate matching, resource (RE) mapping, DMRS cyclic shift (CS), OCC, and the coding scheme (for example, block coding) can be configured as in existing PUCCH format 2/2a/2b/3/4/5. In particular, when the data capacity of UCI is large, it is preferable to apply the mechanism of existing PUCCH formats 4/5 that are designed to support large capacity.

For example, when UCI is larger than 2 bits, the user terminal uses an sPUCCH format using the mechanism of existing PUCCH formats 4/5. Existing PUCCH format 4 does not support code multiplexing (CDM), and can support allocation of one or more PRBs (multiple PRBs). Also, although 1 PRB is subject to allocation in PUCCH format 5, provided that code multiplexing (CDM) is supported, different user terminals can be multiplexed on PRBs in the same sTTI.

Also, the same slot-based sPUCCH format may be configured to support both intra-sTTI frequency hopping (intra-sTTI FH) and frequency hopping other than intra-sTTI frequency hopping. Also, when frequency hopping is used to transmit an sPUCCH (or UCI), reference signals are allocated to every different frequency field in 1 slot. Therefore, it is desirable to configure the sTTI format for 1 slot so that at least 2 reference signals (DMRSs) are allocated in 1 slot. In this case, the configuration regarding the allocation of reference signals for the sPUCCH is designed differently from existing PUCCH formats 4 and 5, in which 1 DMRS is configured in each slot.

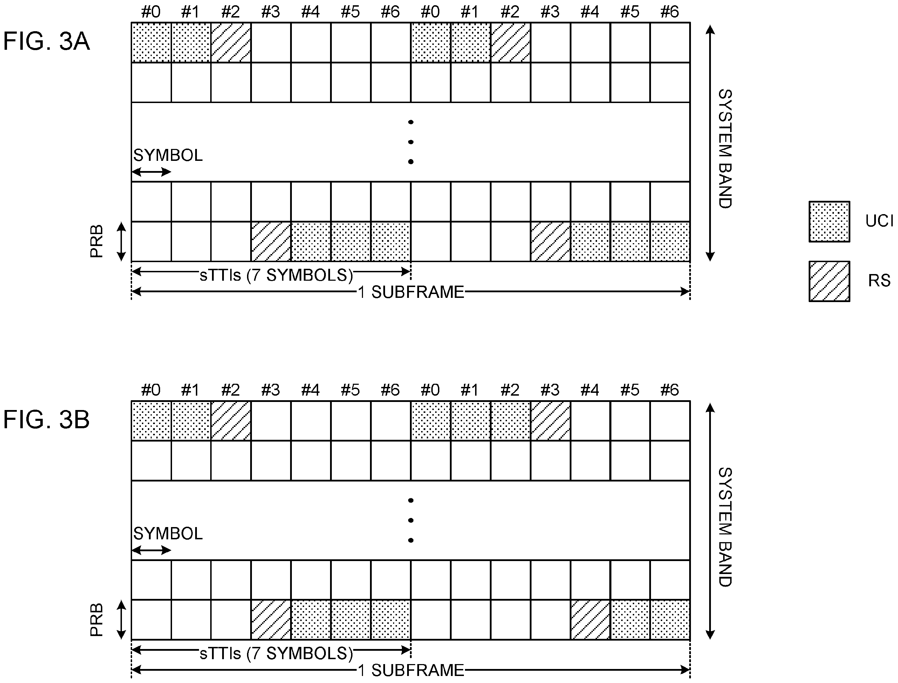

sPUCCH format 2/2a/2b/3/4/5 may be designed so that reference signals (RSs) are allocated to the third and fourth symbols (#2 and #3) and/or the fourth and fifth symbols (#3 and #4), among the symbols (#0 to #6) that constitute an sTTI (slot). In this case, reference signals are allocated to the central part in sPUCCH transmission, so that the RSs can be kept apart from the periods in which the waveform is not determined (transient periods), and which correspond to predetermined periods where transmission starts and/or ends. The location for allocating reference signals may be configured based on what frequency hopping pattern is used (see following FIGs. 3).

A transient period corresponds to a period during in which the quality of transmission signal is not ensured, and therefore a user terminal is allowed to transmit unsound signals (or signals that do not fulfil predetermined quality), or allowed not to transmit signals. This means that, in a UL transmission interval that corresponds to a transient period, distortion of waveforms is tolerated. A transient period is defined by, for example, a predetermined period (for example, 20 µs). If a user terminal transmits a UL signal, the user terminal switches from the power required during "off" to the power required during "on" within the transient period provided at the top of the subframe, and transmits the UL signal (generates the transmitting waveform). If a user terminal stops transmitting signals, the user terminal switches from the power required during "on" to the power required during "off" within the transient period provided at the end of the subframe, and quits transmission.

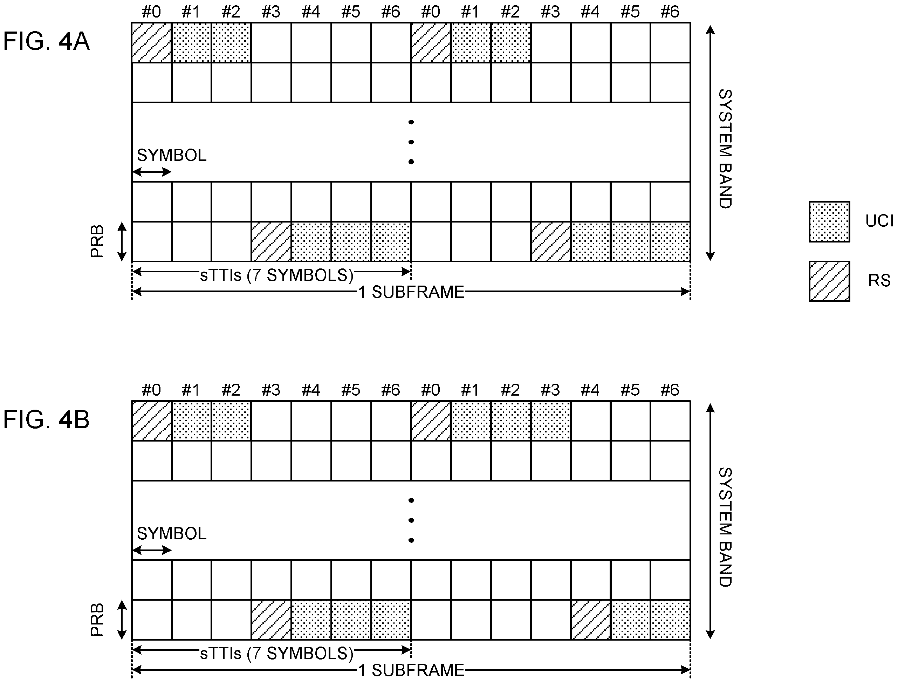

Alternatively, sPUCCH format 2/2a/2b/3/4/5 may be designed so that reference signals are allocated at least to the top symbol (#0) among the symbols (#0 to #6) that constitute an sTTI (slot). For example, reference signals are allocated to the first and fourth symbols (#0 and #3) and/or to the first and fifth symbols (#0 and #4). As such, by allocating RSs to the beginning of each RB, the radio base station can perform receiving processes for RSs (including, for example, channel estimation) more quickly, and so that latency can be reduced. The location for allocating reference signals may be configured based on what frequency hopping pattern is used (see following FIGs. 4).

Alternatively, sPUCCH format 2/2a/2b/3/4/5 may be designed so that reference signals (RSs) are allocated to the second and sixth symbols (#1 and #5) among the symbols (#0 to #6) that constitute an sTTI (slot). With this configuration, RSs are allocated to the same locations as in existing PUCCH format 3, so that, even when an sPUCCH format and PUCCH format 3 are multiplexed, DMRS interference can be randomized (randomization).

In addition, since sPUCCH format 2/2a/2b/3/4/5 is applied to UCI of 2 bits or more, it is preferable to apply channel coding. In channel coding, RM (Reed-Muller) coding without CRC and/or TBCC (Tail Biting Convolutional Coding) with CRC may be used.

As such, by controlling sPUCCH transmission by selecting between a number of given sPUCCH formats depending on the number of UCI bits, it is possible to properly support transmission of UCI in shortened TTIs.

### (Second Example)

With a second example of the present invention, a case will be described below, in which frequency hopping is used when transmitting UCI in sPUCCH formats. The following description will show a case in which frequency hopping is used within an sTTI, but frequency hopping that is available is not limited to intra-sTTI frequency hopping.

A user terminal may use intra-sTTI frequency hopping (Intra-sTTI FH) when transmitting UCI in an sTTI (for example, in 1 slot). The user terminal can control whether to enable or disable intra-sTTI frequency hopping based on information reported from a radio base station by higher layer signaling (for example, RRC signaling and/or broadcast information), downlink control information and/or the like. When frequency hopping is used, the radio base station may report the frequency hopping pattern to the user terminal, or report information about the locations to allocate reference signals, in addition to the frequency hopping pattern.

The user terminal may use a common sPUCCH format (or an sPUCCH format) regardless of whether frequency hopping is enabled or disabled. Also, based on the frequency hopping pattern that is applied, the user terminal may configure the locations to allocate reference signals (RSs) differently between slots (between 2 slots in the same subframe).

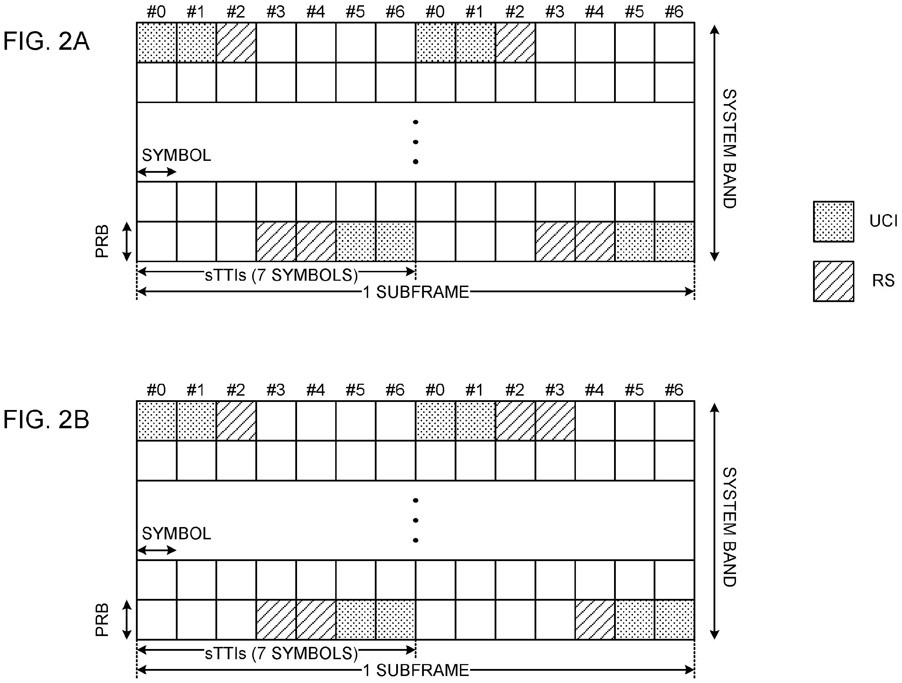

The frequency hopping pattern to apply (Intra-sTTI FH pattern) is, for example, a pattern {[3, 4], [3, 4]} that hops in the frequency direction every 3, 4, 3 and 4 symbols (in units of 3, 4, 3 and 4 symbols) in 1 subframe (2 slots) (see FIGs. 2). FIG. 2A shows the intra-sTTI frequency hopping pattern {[3, 4], [3, 4]} when sPUCCH formats 1a/1b are used. Here, a case is shown where reference signals are allocated to the third to fifth symbols (#2, #3 and #4) of each slot.

Alternatively, the pattern {[3, 4], [4, 3]} that hops in the frequency direction every 3, 4, 4 and 3 symbols in 1 subframe (2 slots) may be used (see FIG. 2B). FIG. 2B shows the intra-sTTI frequency hopping pattern {[3, 4], [4, 3]} when sPUCCH formats 1a/1b are used. Here, a case is shown where reference signals are allocated to the third to fifth symbols (#2, #3 and #4) of each slot.

In FIG. 2B, different hopping patterns are used for the first-half slot and the second-half slot, constituting 2 slots in a subframe. In the first-half slot, the frequency hops between the first 3 symbols and the second 4 symbols, and, in the second-half slot, the frequency hops between the first 4 symbols and the second 3 symbols.

In this way, when applying the frequency hopping pattern {[3, 4], [4, 3]} to frequency hopping for sTTIs (7-OS sTTIs), it is possible to align the hopping pattern with the boundaries of 2-OS sTTIs (sTTI boundary alignment). To be more specific, when 2-OS sTTIs are used, the sPUCCH is allocated to sTTIs, which are each comprised of 3, 2, 2, 2, 2 and 3 symbols, respectively. By applying the frequency hopping pattern {[3, 4], [4, 3]} when 7-OS sTTIs are used, the timings at which the frequency switches in the sPUCCH hopping pattern for 7-OS sTTIs meet the boundaries of 2-OS sTTIs.

By means of this configuration, for example, when transmission power is controlled on a per sTTI basis, it is possible to coordinate the timing to change and control the transmission power. As a result, it is possible to properly control the transmission power in UCI transmission using 7-OS sTTIs and UCI transmission using 2-OS sTTIs, so that it is possible to allow UCI transmission to use 7-OS sTTIs and UCI transmission to use 2-OS sTTIs to be co-present adequately.

FIGs. 3 show examples of intra-sTTI frequency hopping patterns when sPUCCH formats 2/2a/2b/3/4/5 are used and reference signals are allocated to the central part of the slot. FIG. 3A shows a case in which the intra-sTTI frequency hopping pattern {[3, 4], [3, 4]} is used, and FIG 3B shows a case in which the intra-sTTI frequency hopping pattern {[3, 4], [4, 3]} is used.

In FIG. 3A, the hopping pattern is the same between the first-half slot and the second-half slot included in a subframe, so that reference signals may be allocated to the third and fourth symbols (#2 and #3) in each slot.

Also, in FIG. 3B, the hopping pattern varies between the first-half slot and the second-half slot included in a subframe, so that the locations to allocate reference signals may be configured differently between the first-half slot and the second-half slot. Here, a case is shown in which reference signals are allocated to the third and fourth symbols (#2 and #3) in the first-half slot, and in which reference signals are allocated to the fourth and fifth symbols (#3 and #4) in the second-half slot. By this means, even when different hopping patterns are applied to a number of slots included in 1 subframe, it is still possible to allocate reference signals to different frequency fields in each slot (sTTI).

FIGs. 4 show examples of intra-sTTI frequency hopping patterns when sPUCCH formats 2/2a/2b/3/4/5 are used and reference signals are allocated at least to the top of the slot. FIG. 4A shows a case in which the intra-sTTI frequency hopping pattern {[3, 4], [3, 4]} is used, and FIG 4B shows a case in which the intra-sTTI frequency hopping pattern {[3, 4], [4, 3]} is used.

In FIG. 4A, the hopping pattern is the same between the first-half slot and the second-half slot included in a subframe, so that reference signals may be allocated to the first and fourth symbols (#0 and #3) in each slot.

Also, in FIG. 4B, the hopping pattern varies between the first-half slot and the second-half slot included in a subframe, so that the locations to allocate reference signals may be configured differently between the first-half slot and the second-half slot. Here, a case is shown in which reference signals are allocated to the first and fourth symbols (#0 and #3) in the first-half slot, and in which reference signals are allocated to the first and fifth symbols (#0 and #4) in the second-half slot. By this means, even when different hopping patterns are applied to a number of slots included in 1 subframe, it is still possible to allocate reference signals to different frequency fields in each slot (sTTI). Note that, in the configuration of FIG. 4B, reference signals may be allocated to the first and fifth symbols (#0 and #4) in both the first-half slot and the second-half slot.

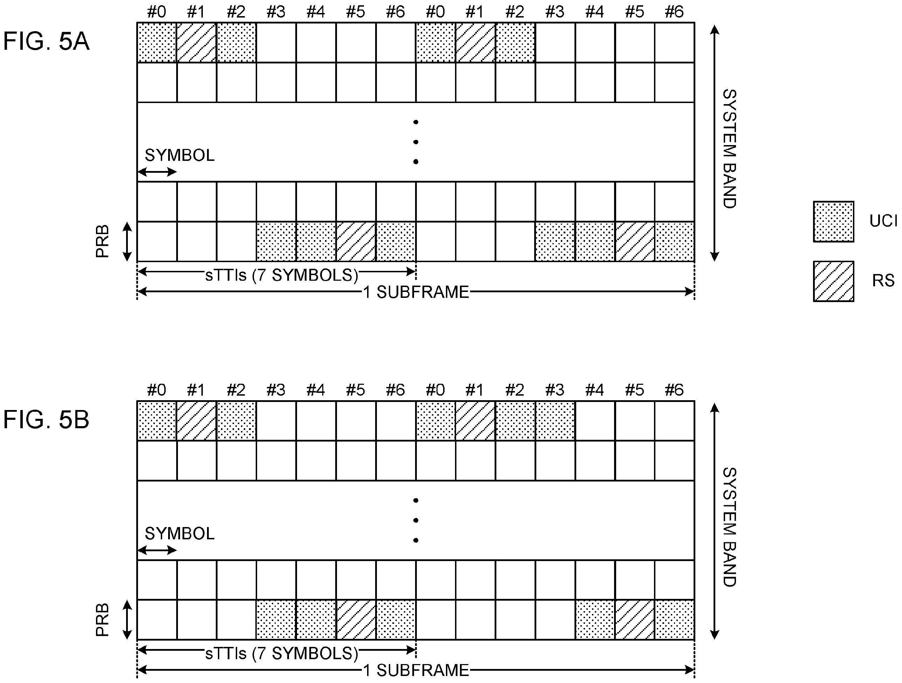

FIGs. 5 show examples of intra-sTTI frequency hopping patterns when sPUCCH formats 2/2a/2b/3/4/5 are used and reference signals are allocated to the second and sixth symbols (#1 and #5) in a slot. FIG. 5A shows a case in which the intra-sTTI frequency hopping pattern {[3, 4], [3, 4]} is used, and FIG 5B shows a case in which the intra-sTTI frequency hopping pattern {[3, 4], [4, 3]} is used.

In FIG. 5A, the hopping pattern is the same between the first-half slot and the second-half slot included in a subframe, so that reference signals have only to be allocated to the second and sixth symbols (#1 and #5) in each slot.

Furthermore, in FIG. 5B, different hopping patterns are used for the first-half slot and the second-half slot included in a subframe. However, since the locations where the hopping pattern switches do not affect the second and sixth symbols (#1, #5), the reference signals may be allocated to the second and sixth symbols (#1 and #5) in each slot. By this means, even when different hopping patterns are applied to a number of slots included in 1 subframe, it is still possible to allocate reference signals to different frequency fields in each slot (sTTI).

### (Third Example)

With a third example of the present invention, the parameters of reference signals (DMRSs) transmitted in sPUCCH formats will be described below. Note that the following DMRS parameters can be suitably applied to DMRSs of predetermined sPUCCH formats for 2-OS sTTIs (for example, 2-symbol sPUCCH format 4), but can also be applied to DMRSs of other sTTI configurations and/or sPUCCH formats. Some of the sPUCCH DMRS parameters are configured so as to be shared in common with other channels (for example, at least one of sPUSCH, PUCCH and PUSCH), or configured independently. Now, example of the parameters of DMRSs will be described below.

### <Sequence Group Hopping>

Also, the number of DMRS sequences in existing LTE systems is configured to 30 or 60, depending on the bandwidth. For example, the number of DMRS sequences is 30 when the bandwidth is 5 physical resource blocks (also referred to as "PRBs," "resource blocks (RBs)," etc.) or less, and 60 when the bandwidth is 6 PRBs or more.

In existing LTE systems, when the bandwidth is 5 PRBs or less, 30 DMRS sequences are identified by group numbers (u=0 to 29) (also referred to as "group indices" and so on). Also, when the bandwidth is 6 PRBs or more, 60 DMRS sequences are identified by group numbers (u=0 to 29) and base sequence numbers (v=0 and 1) (also referred to as "sequence indices" and so on).

When the same DMRS sequence is used by a number of user terminals in different cells, transmission signals from each of these user terminals interfere with each other. Therefore, in order to prevent these user terminals from continuing using the same DMRS sequence, the DMRS sequence hops per slot in a 1-ms TTI. For example, in existing LTE systems, two kinds of hopping methods are used (namely, sequence group hopping and sequence hopping).

In sequence group hopping (also referred to as "SGH" or simply "group hopping"), the above-noted group number (u) hops, per slot, within a TTI of 1-ms. In SGH, each slot's group number (u) is determined based on hopping patterns (f_{gh}) and sequence shift patterns (fₛₛ). These hopping patterns and/or sequence shift patterns may be based on physical cell IDs (cell IDs) or virtual cell IDs. A user terminal may identify physical cell IDs from the sequence numbers of synchronization signals (PSS/SSS), and identify virtual cell IDs from RRC signaling. Note that, in existing LTE systems, for example, 17 hopping patterns and 30 sequence shift patterns are used.

Sequence shift patterns are defined differently between PUCCH and PUSCH. In the event a PUCCH is used, the sequence shift pattern is selected based on a predetermined indicator (for example, n_{ID}^{RS}). n_{ID}^{RS} indicates a physical cell ID or a virtual cell ID. Therefore, the same sequence shift pattern is selected between user terminals that use the same physical cell ID or virtual cell ID in communication, based on a common n_{ID}^{RS}.

In the event a PUSCH is used, the sequence shift pattern is selected based on a cell ID and a value (Δₛₛ or Dₛₛ) that is specified by a higher layer from the group numbers (0 to 29). That is, Δₛₛ or Dₛₛ is used to select the sequence shift pattern for PUSCH, but not used to select the sequence shift pattern for PUCCH.

Meanwhile, in sequence hopping, the above-mentioned base sequence number (v) hops per slot, within 1 TTI. Each slot's base sequence number (v) is determined based on the physical cell ID or the virtual cell ID. Sequence hopping is used when the bandwidth is 6 PRBs or more, and is not used in combination with SGH (when SGH is used, v=0 is configured).

As described above, in existing LTE systems, interference is randomized between cells, so that SGH or sequence hopping can be applied to DMRS sequences. Note that whether to enable SGH or not is reported to the user terminal through higher layer signaling. Similarly, whether to enable sequence hopping or not is reported to the user terminal through higher layer signaling.

With the third example, SGH and/or sequence hopping may be enabled at all times in the DMRS for sPUCCH. By this means, interference between physical cells or virtual cells can be randomized.

Also, Dss for use for selecting the sequence shift pattern for the PUSCH is used for the sPUSCH, but is not used for sPUCCH. Dss is not applied to the existing PUCCH (for 1-ms TTIs), so it follows that the same sequence can be used for the PUCCH and the sPUCCH, and the load of signal processing in the user terminal can be reduced.

Also, predetermined indicators (for example, n_{ID}^{RS}) for use for selecting the sequence shift pattern for the PUCCH may vary among the sPUCCH, the sPUSCH, the PUCCH and the PUSCH. By this means, it is possible to form different virtual cells per channel.

In addition, N_{ID}^{CSH_DMRS} for DMRS is also independent among the sPUCCH, the sPUSCH, the PUCCH and the PUSCH. Here, N_{ID}^{CSH_DMRS} refers to a virtual cell ID for determining cyclic shift hopping patterns. By configuring N_{ID}^{CSH_DMRS} independently per channel, it is possible to form different virtual cells on a per channel basis.

### <Parameter of Cyclic Shift>

In existing LTE systems, cyclic shift (CS) and/or orthogonal spreading code (for example, orthogonal cover code (OCC)) are used to orthogonalize DMRS among a number of user terminals in the same cell. The user terminal can select the CS indices to apply to DMRS based on values reported through higher layer signaling (for example, n⁽¹⁾_{DMRS}).

In this case, a value that is reported by higher layer signaling (for example, n⁽¹⁾_{DMRS}) for the DMRS for the sPUCCH and DMRSs for other channels (for example, at least one of the sPUSCH, the PUCCH, and the PUSCH) in common may be used. By applying a common value to the DMRSs for varying channels, the signaling overhead of higher layer signaling can be reduced.

### (Radio Communication System)

Now, the structure of a radio communication system according to the present embodiment will be described below. In this radio communication system, the radio communication methods according to the above-described embodiments are employed. Note that the radio communication method according to each embodiment described above may be used alone or may be used in combination.

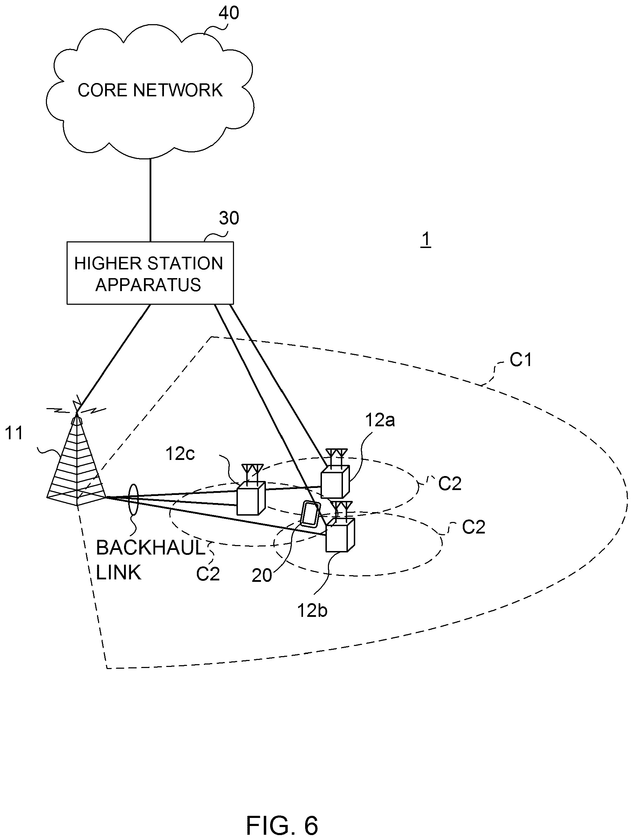

FIG. 6 is a diagram to show an exemplary schematic structure of a radio communication system according to the present embodiment. A radio communication system 1 can adopt carrier aggregation (CA), which groups a number of fundamental frequency blocks (component carriers (CCs)) into one, where an LTE system bandwidth (for example, 20 MHz) is used as 1 unit, and/or dual connectivity (DC). Note that the radio communication system 1 may be referred to as "SUPER 3G," "LTE-A (LTE-Advanced)," "IMT-Advanced," "4G," "5G," "FRA (Future Radio Access)," "NR (New RAT)" and so on.

The radio communication system 1 shown in FIG. 6 includes a radio base station 11 that forms a macro cell C1, and radio base stations 12a to 12c that are placed within the macro cell C1 and that form small cells C2, which are narrower than the macro cell C1. Also, user terminals 20 are placed in the macro cell C1 and in each small cell C2. A structure in which different numerologies are applied between cells may be adopted here. Note that a "numerology" refers to a set of communication parameters that characterize the design of signals in a given RAT, or the design of the RAT.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA or DC by using a plurality of cells (CCs) (for example, two or more CCs). Furthermore, the user terminals can use licensed-band CCs and unlicensed-band CCs as a plurality of cells.

Furthermore, the user terminals 20 can communicate based on time division duplexing (TDD) or frequency division duplexing (FDD) in each cell. A TDD cell and an FDD cell may be referred to as a "TDD carrier (frame structure type 2)" and an "FDD carrier (frame structure type 1)," respectively.

In each cell (carrier), either 1-ms TTIs (subframes) or short TTI (sTTIs) may be used, or both 1-ms TTIs and sTTIs may be used.

Between the user terminals 20 and the radio base station 11, communication can be carried out using a carrier of a relatively low frequency band (for example, 2 GHz) and a narrow bandwidth (referred to as, for example, an "existing carrier," a "Legacy carrier," and/or the like). Meanwhile, between the user terminals 20 and the radio base stations 12, a carrier of a relatively high frequency band (for example, 3.5GHz, 5GHz, 30 to 70 GHz and so on) and a wide bandwidth may be used, or the same carrier as that used in the radio base station 11 may be used. Note that the structure of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base station 12 (or between 2 radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals or stationary communication terminals. Furthermore, the user terminals 20 can perform device-to-device (D2D) communication with other user terminals 20.

In the radio communication system 1, as radio access schemes, OFDMA (Orthogonal Frequency Division Multiple Access) can be applied to the downlink (DL), and SC-FDMA (Single-Carrier Frequency Division Multiple Access) can be applied to the uplink (UL). OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to the combination of these, and OFDMA may be used in the UL.

DL channels that are used in radio communication system 1 include a DL data channel that is shared by each user terminal 20 (also referred to as a "PDSCH (Physical Downlink Shared CHannel)," a "DL shared channel," an "sPDSCH," a "1-ms PDSCH," and so forth), a broadcast channel (PBCH (Physical Broadcast CHannel)), L1/L2 control channels, and so forth. At least one of user data, higher layer control information, SIBs (System Information Blocks) and so forth is communicated in the PDSCH. Also, the MIB (Master Information Block) is communicated in the PBCH.

The L1/L2 control channels include DL control channels (also referred to as "PDCCH (Physical Downlink Control CHannel)," "EPDCCH (Enhanced Physical Downlink Control CHannel)," "sPDCCH," etc.), PCFICH (Physical Control Format Indicator CHannel), PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. The EPDCCH is frequency-division-multiplexed with the PDSCH and used to communicate DCI and so on, like the PDCCH. HARQ retransmission command information (ACK/NACK) in response to the PUSCH can be communicated by using at least one of the PHICH, the PDCCH and the EPDCCH.

UL channels that are used in the radio communication system 1 include UL data channels that are shared by each user terminal 20 (also referred to as "PUSCH (Physical Uplink Shared CHannel)," "UL shared channel," "sPUSCH," "1-ms PUSCH," etc.), a UL control channel (also referred to as "PUCCH (Physical Uplink Control CHannel)," "sPUCCH," "1-ms PUCCH," etc.), a random access channel (PRACH (Physical Random Access CHannel)) and so forth. User data, higher layer control information and so on are communicated by the PUSCH. Uplink control information (UCI), including at least one of retransmission command information (ACK/NACK), channel state information (CSI) and so on is communicated in the PUSCH or the PUCCH. By means of the PRACH, random access preambles for establishing connections with cells are communicated.

### (Radio Base Station)

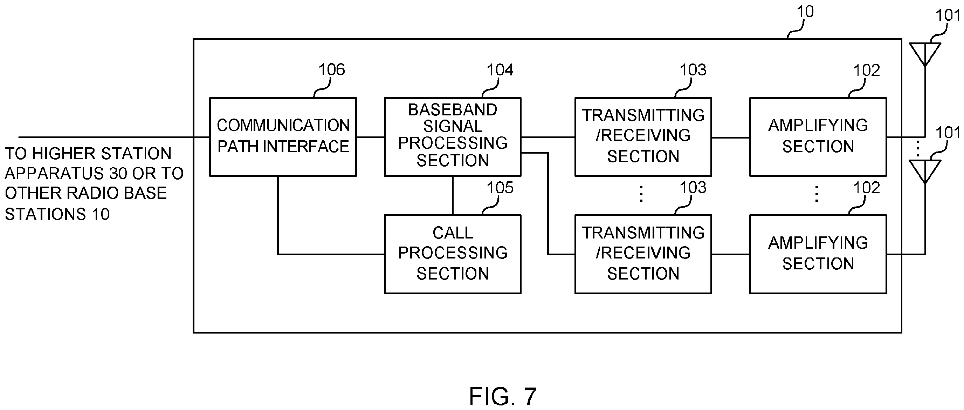

FIG. 7 is a diagram to show an exemplary overall structure of a radio base station according to the present embodiment. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process, a precoding process and so forth, and the result is forwarded to each transmitting/receiving section 103. Furthermore, downlink control signals are also subjected to transmission processes such as channel coding and an inverse fast Fourier transform, and forwarded to the transmitting/receiving sections 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101.

A transmitting/receiving section 103 can be constituted by a transmitters/receiver, a transmitting/receiving circuit or transmitting/receiving apparatus that can be described based on general understanding of the technical field to which the present invention pertains. Note that a transmitting/receiving section 103 may be designed as a transmitting/receiving section in one entity, or may be constituted by a transmitting section and a receiving section.

Meanwhile, as for UL signals, radio frequency signals that are received in the transmitting/receiving antennas 101 are amplified in the amplifying sections 102. The transmitting/receiving sections 103 receive the UL signals amplified in the amplifying sections 102. The received signals are converted into the baseband signal through frequency conversion in the transmitting/receiving sections 103 and output to the baseband signal processing section 104.

In the baseband signal processing section 104, UL data that is included in the UL signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing such as setting up and releasing communication channels, manages the state of the radio base station 10, manages the radio resources and so forth.

The communication path interface section 106 transmits and receives signals to and from the higher station apparatus 30 via a predetermined interface. Also, the communication path interface 106 may transmit and receive signals (backhaul signaling) with neighboring radio base stations 10 via an inter-base station interface (which is, for example, optical fiber in compliance with the CPRI (Common Public Radio Interface), the X2 interface, etc.).

Also, the transmitting/receiving section 103 receive uplink control information (UCI) that is transmitted from the user terminal in a shortened TTI (sTTI), which has a shorter transmission time interval (TTI (Transmission Time Interval)) length than 1 ms. For example, a predetermined uplink control channel format for shortened TTIs is applied to the UCI, depending on the number of bits. Also, the transmitting/receiving sections 103 may transmit information to specify whether or not frequency hopping for UCI (sPUCCH) is configured in the sTTI, through higher layer signaling, downlink control information and the like. Also, when frequency hopping is configured, the transmitting/receiving sections 103 may report the frequency hopping pattern, or report information about the locations to allocate reference signals, in addition to the frequency hopping pattern.

In addition, the transmitting/receiving sections 103 may report information about the parameters of a reference signal (DMRS) to be transmitted in a predetermined sTTI sPUCCH format. Each parameter may report a common value with DMRSs for other channels (sPUSCH, PUCCH, PUSCH), or report a different value.

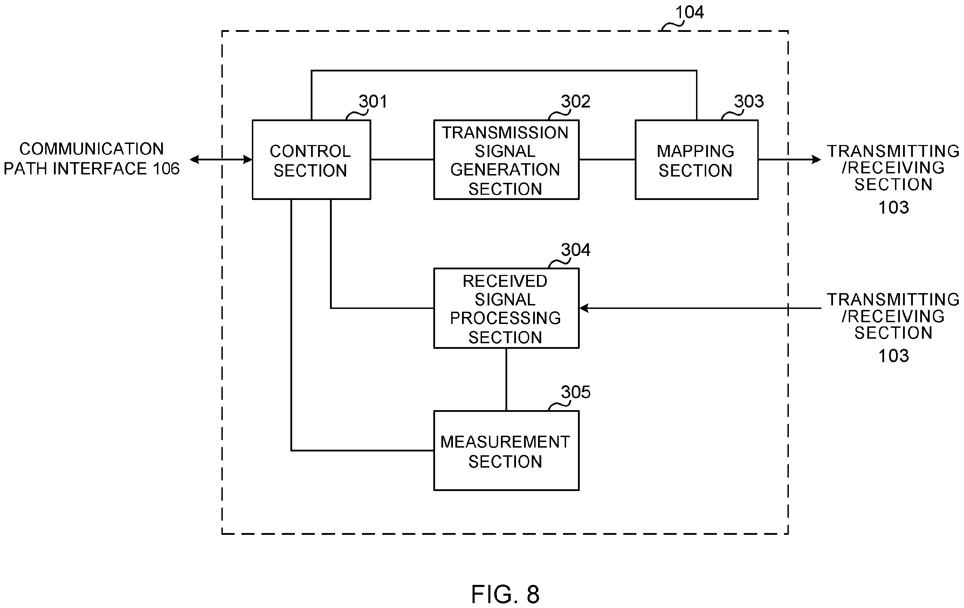

FIG. 8 is a diagram to show an exemplary functional structure of a radio base station according to the present embodiment. Note that, although FIG. 8 primarily shows functional blocks that pertain to characteristic parts of the present embodiment, the radio base station 10 has other functional blocks that are necessary for radio communication as well. As shown in FIG. 8, the baseband signal processing section 104 has a control section 301, a transmission signal generation section 302, a mapping section 303, a received signal processing section 304 and a measurement section 305.

The control section 301 controls the whole of the radio base station 10. The control section 301 controls, for example, generation of DL signals in the transmission signal generation section 302, mapping of DL signals in the mapping section 303, receiving processes (for example, demodulation) for UL signals in the received signal processing section 304, and measurements in the measurement section 305.

The control section 301 schedules DL data channels (including the PDSCH and the sPDSCH) and UL data channels (including the PUSCH and the sPUSCH) for user terminals 20.

In addition, the control section 301 exerts control so that DCI (DL assignments) to include DL data channel scheduling information, and/or DCI (UL grants) to include UL data channel scheduling information are mapped to candidate resources (including legacy PDCCH candidates and sPDCCH candidates) for DL control channels (including the legacy PDCCH and the sPDSCH), and transmitted.

Further, the control section 301 may control whether or not to apply frequency hopping to the transmission of UCI transmission in the user terminal. The control section 301 can be constituted by a controller, a control circuit or control apparatus that can be described based on general understanding of the technical field to which the present invention pertains.

The transmission signal generation section 302 generates DL signals (including DL data channels, DL control channels, DL reference signals and so on) based on commands from the control section 301, and outputs these signals to the mapping section 303. The transmission signal generation section 302 can be constituted by a signal generator, a signal generating circuit or signal generating apparatus that can be described based on general understanding of the technical field to which the present invention pertains.

The mapping section 303 maps the DL signal generated in the transmission signal generation section 302 to a radio resource, as commanded from the control section 301, and outputs this to the transmitting/receiving sections 203. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding, etc.) for UL signals transmitted from the user terminals 20 (including, for example, UL data channels, UL control channels, UL control signals, etc.).

The measurement section 305 conducts measurements with respect to the received signal. The measurement section 305 can be constituted by a measurer, a measurement circuit or measurement apparatus that can be described based on general understanding of the technical field to which the present invention pertains.

### (User Terminal)

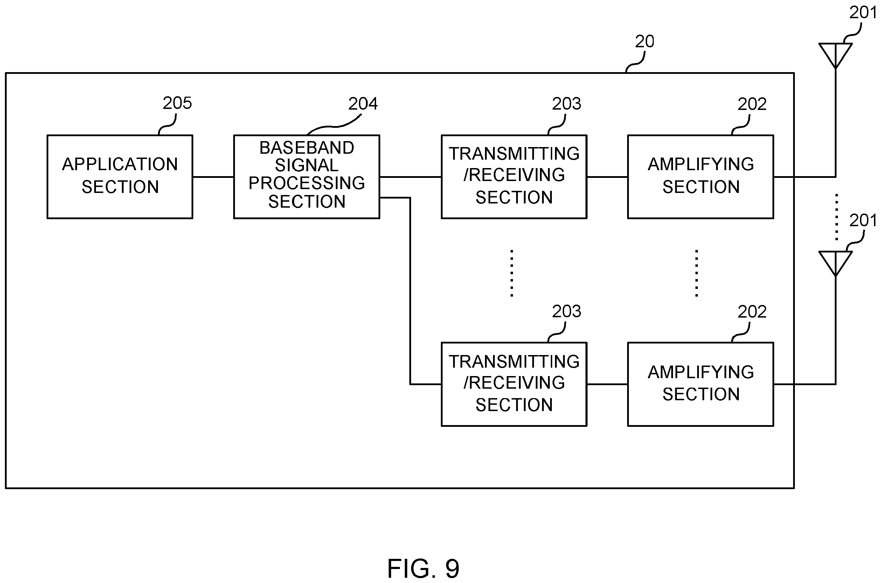

FIG. 9 is a diagram to show an exemplary overall structure of a user terminal according to the present embodiment. A user terminal 20 has a plurality of transmitting/receiving antennas 201 for MIMO communication, amplifying sections 202, transmitting/receiving sections 203, a baseband signal processing section 204 and an application section 205.

Radio frequency signals that are received in multiple transmitting/receiving antennas 201 are amplified in the amplifying sections 202. The transmitting/receiving sections 203 receive DL signals amplified in the amplifying sections 202. The received signals are subjected to frequency conversion and converted into the baseband signal in the transmitting/receiving sections 203, and output to the baseband signal processing section 204.

The baseband signal processing section 204 performs, for the baseband signal that is input, an FFT process, error correction decoding, retransmission control receiving processes, and so on. The DL data is forwarded to the application section 205. The application section 205 performs processes related to higher layers above the physical layer and the MAC layer, and so on. Also, the broadcast information is also forwarded to application section 205.

Meanwhile, UL data is input from the application section 205 to the baseband signal processing section 204. The baseband signal processing section 204 performs a retransmission control transmission process (for example, an HARQ transmission process), channel coding, rate matching, puncturing, a discrete Fourier transform (DFT) process, an IFFT process and so on, and the result is forwarded to each transmitting/receiving section 203. UCI (for example, DL retransmission control information, channel state information, etc.) is also subjected to channel encoding, rate matching, puncturing, a DFT process, an IFFT process and so on, and forwarded to each transmitting/receiving section 203.

Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

Also, the transmitting/receiving sections 203 transmit uplink control information (UCI), via sPUCCH, by using a shortened TTI (sTTI). For example, the transmitting/receiving sections 203 transmit UCI based on a predetermined uplink control channel format for shortened TTIs, selected based on the number of bits. Also, the transmitting/receiving sections 203 may receive information to specify whether or not frequency hopping for UCI (sPUCCH) is configured in the sTTI, through higher layer signaling, downlink control information and the like. Also, when frequency hopping is used, the transmitting/receiving sections 203 may receive the frequency hopping pattern, or receive information about the locations to allocate reference signals, in addition to the frequency hopping pattern.

A transmitting/receiving section 203 can be constituted by a transmitter/receiver, a transmitting/receiving circuit or transmitting/receiving apparatus that can be described based on general understanding of the technical field to which the present invention pertains. Furthermore, a transmitting/receiving section 203 may be structured as 1 transmitting/receiving section, or may be formed with a transmitting section and a receiving section.

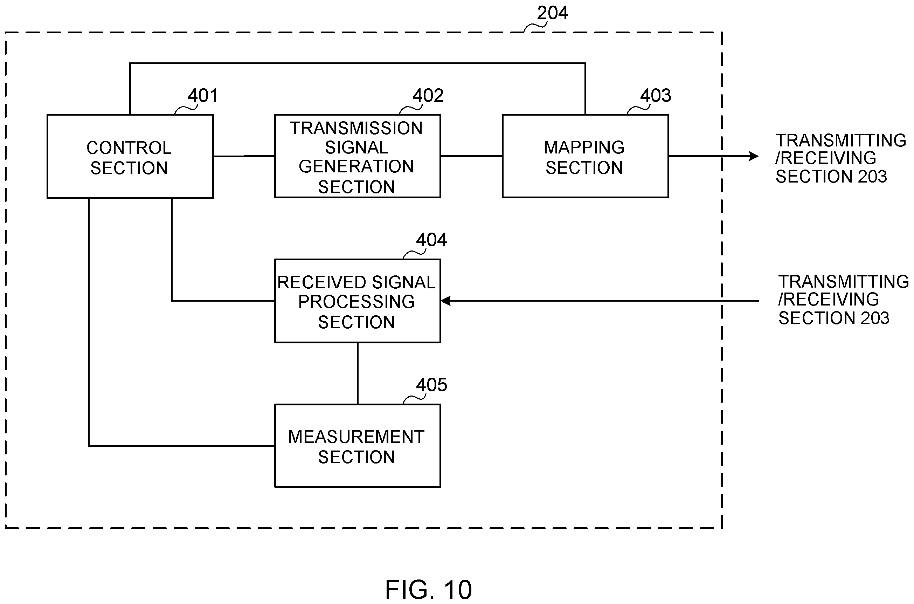

FIG. 10 is a diagram to show an exemplary functional structure of a user terminal according to the present embodiment. Note that, although FIG. 10 primarily shows functional blocks that pertain to characteristic parts of the present embodiment, the user terminal 20 has other functional blocks that are necessary for radio communication as well. As shown in FIG. 10, the baseband signal processing section 204 provided in the user terminal 20 has a control section 401, a transmission signal generation section 402, a mapping section 403, a received signal processing section 404 and a measurement section 405.

The control section 401 controls the whole of the user terminal 20. The control section 401 controls, for example, generation of UL signals in the transmission signal generation section 402, mapping of UL signals in the mapping section 403, DL signal receiving processes in the received signal processing section 404, measurements in the measurement section 405, and so forth.

The control section 401 controls receipt of DL data channels (including the PDSCH, the sPDSCH, etc.) and transmission of UL data channels (including the PUSCH, the sPUSCH, etc.) based on DCI (DL assignments and/or UL grants) addressed to the user terminal 20. Also the control section 401 controls transmission of a delivery acknowledgment signals (HARQ-ACK) in response to DL data, channel state information (CSI), scheduling requests (SR) and so forth.

For example, the control section 401 controls transmission of uplink control information using a predetermined uplink control channel format for shortened TTIs, based on the number of bits of uplink control information to be transmitted in shortened TTIs. Also, the control section 401 may apply frequency hopping within shortened TTIs, to transmission of uplink control information. The control section 401 may apply the same or different frequency hopping patterns to contiguous slots (for example, the first-half slot and the second-half slot included in 1 subframe) (see FIGs. 2 to FIG. 5).

The control section 401 exerts control so that reference signals are allocated to a number of frequency fields for allocating uplink control information, by using frequency hopping. Also, the control section 401 may apply a common uplink control channel format regardless of whether frequency hopping is enabled or disabled in shortened TTIs.

The control section 401 can be constituted by a controller, a control circuit or control apparatus that can be described based on general understanding of the technical field to which the present invention pertains.

The transmission signal generation section 402 generates UL signals (including performing encoding, rate matching, puncturing, modulation and/or other processes) as commanded from the control section 401, and outputs these to the mapping section 403. The transmission signal generation section 402 can be constituted by a signal generator, a signal generating circuit or signal generating apparatus that can be described based on general understanding of the technical field to which the present invention pertains.

The mapping section 403 maps the DL signals generated in the transmission signal generation section 402 to radio resources, as commanded from the control section 401, and outputs these to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes for DL signals (for example, demapping, demodulation, decoding, etc.). The received signal processing section 404 outputs the information received from the radio base station 10, to the control section 401. The received signal processing section 404 outputs, for example, broadcast information, system information, high layer control information related to higher layer signaling such as RRC signaling, physical layer control information (L1/L2 control information) and so on, to the control section 401.

The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The measurement section 405 measures channel states based on reference signals (for example, CSI-RS) from the radio base station 10, and outputs the measurement results to the control section 401. Note that channel state measurements may be conducted per CC.

The measurement section 405 can be constituted by a signal processor, a signal processing circuit or signal processing apparatus, and a measurer, a measurement circuit or measurement apparatus that can be described based on general understanding of the technical field to which the present invention pertains.

### (Hardware Structure)

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these multiple pieces of apparatus.

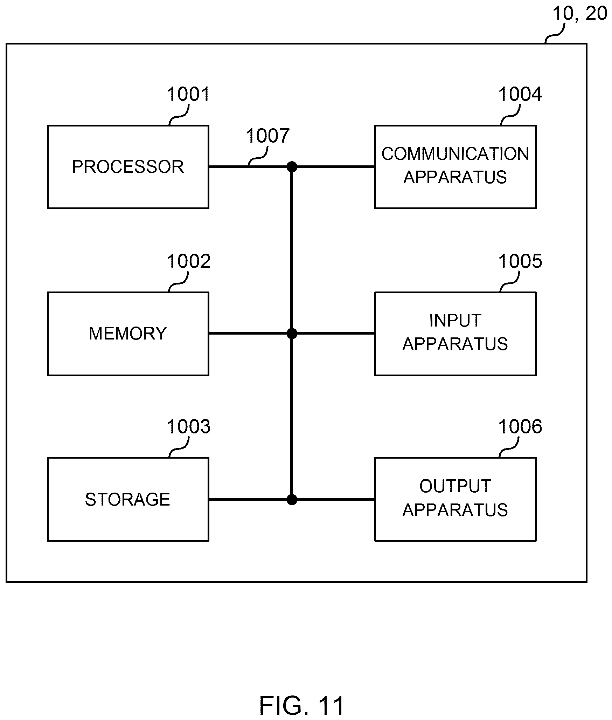

For example, the radio base stations, user terminals and so on according to the herein-contained embodiments of the present invention may function as a computer that executes the processes of the radio communication method of the present invention. FIG. 11 is a diagram to show an exemplary hardware structure of a radio base station and a user terminal according to one embodiment of the present invention. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented in sequence, or in different manners, on one or more processors. Note that the processor 1001 may be implemented with one or more chips.

The functions of the radio base station 10 and the user terminal 20 are implemented by allowing hardware such as the processor 1001 and the memory 1002 to read predetermined software (programs), thereby allowing the processor 1001 to do calculations, controlling the communication apparatus 1004 to communicate, and controlling the memory 1002 and the storage 1003 to read and/or write data.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and others may be implemented by the processor 1001.

Furthermore, the processor 1001 reads programs (program codes), software modules, data and so forth from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory (primary storage apparatus)" and so on. The memory 1002 can store executable programs (program codes), software modules and so on for implementing the radio communication methods according to embodiments of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals" (or "signaling"). Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

Furthermore, a radio frame may be formed with one or more periods (frames) in the time domain. Each of one or more periods (frames) constituting a radio frame may be referred to as a "subframe." Furthermore, a subframe may be formed with one or more slots in the time domain. A subframe may be a fixed time length (for example, 1 ms) not dependent on the numerology.

A slot may be formed with one or more symbols in the time domain (OFDM (Orthogonal Frequency Division Multiplexing) symbols, SC-FDMA (Single-Carrier Frequency Division Multiple Access) symbols, and so on). Also, a slot may be a time unit based on numerology. Also, a slot may include a plurality of mini-slots. Each mini-slot may be formed with 1 or more symbols in the time domain. Also, a mini-slot may be referred to as a "subslot."

A radio frame, a subframe, a slot, a mini-slot and a symbol all represent the time unit in signal communication. A radio frame, a subframe, a slot, a mini-slot and a symbol may be each called by other applicable names. For example, 1 subframe may be referred to as a "transmission time interval (TTI)," or a plurality of consecutive subframes may be referred to as a "TTI," or 1 slot or mini-slot may be referred to as a "TTI." That is, a subframe and/or a TTI may be a subframe (1 ms) in existing LTE, may be a shorter period than 1 ms (for example, 1 to 13 symbols), or may be a longer period of time than 1 ms. Note that the unit to represent a TTI may be referred to as a "slot," a "mini-slot" and so on, instead of a "subframe."

Here, a TTI refers to the minimum time unit of scheduling in radio communication, for example. For example, in LTE systems, a radio base station schedules the radio resources (such as the frequency bandwidth and/or the transmission power that can be used in each user terminal) to allocate to each user terminal in TTI units. Note that the definition of TTIs is not limited to this.

The TTI may be the transmission time unit of channel-encoded data packets (transport blocks), code blocks and/or codewords, or may be the unit of processing in scheduling, link adaptation and so on. Note that, when a TTI is given, the period of time (for example, the number of symbols) in which transport blocks, code blocks and/or codewords are actually mapped may be shorter than the TTI.

Note that, when 1 slot or 1 mini-slot is referred to as a "TTI," one or more TTIs (that is, one or multiple slots or one or more mini-slots) may be the minimum time unit of scheduling. Also, the number of slots (the number of mini-slots) to constitute this minimum time unit of scheduling may be controlled.

A TTI having a time length of 1 ms may be referred to as a "subframe," a "normal TTI (TTI in LTE Rel. 8 to 12)," a "long TTI," a "normal subframe," a "long subframe," and so on. A TTI that is shorter than a normal TTI may be referred to as an "sTTI," a "shortened TTI," a "short TTI," a "partial TTI (or a "fractional TTI")," a "shortened subframe," a "short subframe," a "mini-slot," a "sub-slot," and so on.

Note that a long TTI (for example, a normal TTI, a subframe, etc.) may be replaced with a TTI having a time length over 1 ms or a TTI that is longer than a short TTI, and a short TTI (for example, a shortened TTI) may be replaced with a TTI having a TTI length less than the TTI length of a long TTI and more than or equal to 1 ms.

A resource block (RB) is the unit of resource allocation in the time domain and the frequency domain, and may include one or a plurality of consecutive subcarriers in the frequency domain. Also, an RB may include one or more symbols in the time domain, and may be 1 slot, 1 mini-slot, 1 subframe or 1 TTI in length. 1 TTI and 1 subframe each may be formed with one or more resource blocks. Note that one or more RBs may be referred to as a "physical resource block (PRB (Physical RB))," a "subcarrier group (SCG)," a "resource element group (REG)," a "PRB pair," an "RB pair" and so on.

Furthermore, a resource block may be formed with one or more resource elements (REs). For example, 1 RE may be a radio resource field of 1 subcarrier and 1 symbol.

Note that the structures of radio frames, subframes, slots, mini-slots, symbols and so on described above are merely examples. For example, configurations pertaining to the number of subframes included in a radio frame, the number of slots included in a subframe or a radio frame, the number of mini-slots included in a slot, the number of RBs included in a slot or a mini-slot, the number of subcarriers included in an RB, the number of symbols in a TTI, the duration of symbols, the duration of cyclic prefixes (CPs) and so on can be changed in a variety of ways.

Also, the information and parameters described in this specification may be represented in absolute values or in relative values with respect to predetermined values, or may be represented in other information formats. For example, radio resources may be specified by predetermined indices. In addition, equations to use these parameters and so on may be used, apart from those explicitly disclosed in this specification.

The names used for parameters and so on in this specification are in no respect limiting. For example, since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and/or output via a plurality of network nodes.

The information, signals and so on that are input and/or output may be stored in a specific location (for example, a memory), or may be managed using a management table. The information, signals and so on to be input and/or output can be overwritten, updated or appended. The information, signals and so on that are output may be deleted. The information, signals and so on that are input may be transmitted to other pieces of apparatus.

Reporting of information is by no means limited to the examples/embodiments described in this specification, and other methods may be used as well. For example, reporting of information may be implemented by using physical layer signaling (for example, downlink control information (DCI), uplink control information (UCI), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (LI control signal)" and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (by, for example, not reporting this piece of information, or by reporting a different piece of information).

Decisions may be made in values represented by 1 bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "gNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, 3) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may also be referred to as, for example, a "subscriber station," a "mobile unit," a "subscriber unit," a "wireless unit," a "remote unit," a "mobile device," a "wireless device," a "wireless communication device," a "remote device," a "mobile subscriber station," an "access terminal," a "mobile terminal," a "wireless terminal," a "remote terminal," a "handset," a "user agent," a "mobile client," a "client" or some other suitable terms.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, user terminals 20 may have the functions of the radio base stations 10 described above. In addition, terms such as "uplink" and "downlink" may be interpreted as "side." For example, an "uplink channel" may be interpreted as a "side channel."

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by higher nodes (upper nodes). In a network formed with one or more network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The examples/embodiments illustrated in this specification may be used individually or in combinations, which may be switched depending on the mode of implementation. The order of processes, sequences, flowcharts and so on that have been used to describe the examples/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to systems that use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark) and other adequate radio communication methods, and/or next-generation systems that are enhanced based on these.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used herein only for convenience, as a method of distinguishing between two or more elements. In this way, reference to the first and second elements does not imply that only 2 elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination thereof. For example, "connection" may be interpreted as "access." As used herein, two elements may be considered "connected" or "coupled" to each other by using one or more electrical wires, cables and/or printed electrical connections, and, as a number of non-limiting and non-inclusive examples, by using electromagnetic energy having wavelengths in radio frequency fields, microwave regions and optical (both visible and invisible) regions.

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

## Claims

1. A user terminal comprising:
a transmitting section that transmits uplink control information by using a shortened TTI, in which a length of a transmission time interval (TTI) is shorter than 1 ms; and
a control section that controls transmission of the uplink control information by using a given uplink control channel format for the shortened TTI, based on the number of bits of uplink control information transmitted in the shortened TTI.

2. The user terminal according to claim 1, wherein the control section applies frequency hopping within the shortened TTI, to the transmission of the uplink control information.

3. The user terminal according to claim 2, wherein, the control section applies different frequency hopping patterns to a plurality of slots included in 1 subframe.

4. The user terminal according to claim 2 or claim 3, wherein the control section exerts control so that a reference signal is allocated to each of a plurality of frequency domain where the uplink control information is allocated, by using frequency hopping.

5. The user terminal according to one of claim 2 to claim 4, wherein the control section uses a common uplink control channel format regardless of whether frequency hopping is enabled or disabled within the shortened TTI.

6. A radio communication method for a user terminal, comprising the steps of:
transmitting uplink control information by using a shortened TTI, in which a length of a transmission time interval (TTI) is shorter than 1 ms; and
controlling transmission of the uplink control information by using a given uplink control channel format for the shortened TTI, based on the number of bits of uplink control information transmitted in the shortened TTI.
